# EUROPÄISCHE PATENTSCHRIFT

(11) **EP 2 458 410 B1**
(45) Veröffentlichungstag und Bekanntmachung des Hinweises auf die Patenterteilung: **02.06.2021**
(21) Anmeldenummer: 11189076.0
(22) Anmeldetag: 15.11.2011
(51) Int. Cl.: G01V 8/20

(54) **Lichtgitter**
Light grid
Barrière lumineuse

(30) Priorität: 24.11.2010 DE 102010052450
(43) Veröffentlichungstag der Anmeldung: 30.05.2012
(73) Patentinhaber: Leuze electronic GmbH + Co KG, 73277 Owen/Teck (DE)
(72) Erfinder: Schönleitner, Arnold, 3002 Purkersdorf (AT)
(74) Vertreter: Ruckh, Rainer Gerhard

(56) Entgegenhaltungen:
- DE-A1- 10 011 598
- US-A1- 2006 071 154

## Beschreibung

Die Erfindung betrifft ein Lichtgitter zur Erfassung von Objekten in einem Überwachungsbereich mit einer vorgegebenen Anzahl von Lichtstrahlen in Form von Sendepulsen emittierenden Sendern und einer der Zahl der Sender entsprechenden Anzahl von Lichtstrahlen empfangenden Empfängern. Jeweils ein Sender ist einem Empfänger zur Ausbildung einer Lichtachse so zugeordnet, dass bei freiem Überwachungsbereich die Lichtstrahlen des Senders auf den zugeordneten Empfänger treffen, wobei die Sender und Empfänger der Lichtachsen zyklisch einzeln nacheinander aktiviert sind. In einer Auswerteeinheit erfolgt eine Generierung eines Schaltsignals in Abhängigkeit der Empfangssignale der Empfänger.

Die Einzelaktivierung der Lichtachsen erfolgt in bekannter Weise dadurch, dass den Sendern Schaltmittel zugeordnet sind, um diese einzeln zu aktivieren, und dass den Empfängern Schaltmitteln zugeordnet sind, um diese einzeln zu aktivieren. Die sende- und empfangsseitigen Schaltmittel werden über die Lichtstrahlen des Lichtgitters optisch synchronisiert. Beispielsweise ist eine Lichtachse vorgesehen, deren Sendepulse sich charakteristisch von den Sendepulsen aller anderen Lichtachsen unterscheidet. Die Sendepulse dieser Lichtachse werden dann zur optischen Synchronisation der Sender- und Empfängeraktivierung verwendet.

Bei bekannten Lichtgittern sind den Empfängern Koppelkondensatoren nachgeordnet. Diese dienen dazu, die von auftreffendem Gleichlicht verursachten Störlichtanteile in den Empfangssignalen der Empfänger zu eliminieren.

Nachteilig hierbei ist jedoch, dass bei den seriellen Einzelaktivierungen der Empfänger in den Empfangssignalen Signalsprünge auftreten, da die Koppelkondensatoren noch teilweise aufgeladen sind. Derartige Signalsprünge können um Faktoren bis zu 1000 größer sein als die jeweiligen Nutzsignalanteile und verfälschen die Empfangssignale damit erheblich, wodurch Fehldetektionen entstehen können.

Die DE 39 00 562 A1 beschreibt einen Empfangsverstärker, dessen Gleichspannungsanteil über eine Tiefpassrückkopplung kompensiert wird. Die Bandbreite des Rückkopplungsnetzwerkes ist so dimensioniert, dass das Gleichlicht sicher unterdrückt, aber so träge ist (tiefe Grenzfrequenz) dass kurze Nutzlichtimpulse ungehindert verstärkt werden.

Die US 6 956 439 B1 beschreibt eine Regelung und Gleichlichtkompensation mit einer Stromquelle, wobei ein Tiefpass die Trennung zwischen Gleichlicht und dem Wechselnutzlicht vornehmen muss.

Die EP 1 319 965 B1 beschreibt eine Vorrichtung mit einem Differenz-und Nachverstärker zur Gleichlichtkompensation.

Die DE 197 30 333 C1 beschreibt einen Differenzverstärker mit einem Regelkreis mit Tiefpassfilter, wodurch die Nachregelung so träge erfolgt, dass das Nutzsignal nur wenig gedämpft wird.

Bei den Systemen gemäß der genannten Druckschriften wird zwar auf Koppelkondensatoren verzichtet. Die im Regelkreis benötigten Tiefpassfilter müssen jedoch entsprechend träge sein um das Nutzsignal nicht zu dämpfen, wodurch ein Gleichlichtsprung nicht schnell genug ausregelt werden kann.

Von der Firma Sitronic ist das Lichtgitter Infrascan 4000 bekannt, bei dem für jedes Empfangselement ein eigener Verstärker vorgesehen ist. Damit kann das Problem bei der Umschaltung auf eine andere Lichtachse zwar behoben werden, aber der Aufwand erhöht sich mit jeder Lichtachse.

Der Erfindung liegt die Aufgabe zugrunde, ein Lichtgitter bereitzustellen, welches bei geringem konstruktivem Aufwand robust gegen Störeinflüsse ist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Das erfindungsgemäße Lichtgitter dient zur Erfassung von Objekten in einem Überwachungsbereich und umfasst eine vorgegebene Anzahl von Lichtstrahlen in Form von Sendepulsen emittierenden Sendern und eine der Zahl der Sender entsprechende Anzahl von Lichtstrahlen empfangenden Empfängern. Jeweils ein Sender ist einem Empfänger zur Ausbildung einer Lichtachse zugeordnet. Bei freiem Überwachungsbereich treffen die Lichtstrahlen des Senders auf den zugeordneten Empfänger auf. Die Sender und Empfänger der Lichtachsen sind zyklisch einzeln nacheinander aktiviert. In einer Auswerteeinheit wird in Abhängigkeit der Empfangssignale der Empfänger ein Schaltsignal generiert. Es ist eine Regeleinheit vorgesehen, mittels derer die Störlichtanteile in den Empfangssignalen der Empfänger eliminiert werden. Die Regeleinheit ist während der Zeitintervalle, innerhalb derer die Sender Sendepulse emittieren, deaktiviert.

Ein wesentlicher Vorteil der Erfindung besteht darin, dass bei dem erfindungsgemäßen Lichtgitter keine Koppelkondensatoren zur Elimination von Störsignalanteilen, bedingt durch Gleichlichteinstrahlungen in die Empfänger, benötigt werden. Damit werden durch die Koppelkondensatoren verursachte Signalsprünge der Empfangssignale bei der Einzelaktivierung der Empfänger ausgeschlossen und dadurch bedingte Fehldetektionen vermieden.

Die US 2006/0071154 A1 betrifft einen mehrere optische Achsen aufweisenden Sensor. Jede optische Achse weist einen Lichtstrahlen emittierenden Sender und einen Lichtstrahlen empfangenden Empfänger auf. Die Sender emittieren einzeln nacheinander Lichtstrahlen in Form von Lichtimpulsen. Eine Störungsfeststellungseinheit ermittelt nur in den Sendepausen, in denen keine Lichtimpulse emittiert werden, ob Störlicht empfangen wird.

Die DE 100 11 598 A1 betrifft ein Verfahren zum Betreiben einer optoelektronischen Sensoranordnung, bei dem eine Vielzahl von aufeinanderfolgenden Nutzlichtimpulsen in einen Überwachungsbereich ausgesandt werden, und die von einem in dem Überwachungsbereich angeordneten Objekt reflektierten Nutzlichtimpulse von einer ortsauflösenden Empfängereinheit mit einer Vielzahl von lichtempfindlichen Sensoren empfangen werden. Jeweils während eines Aktivierungsintervalls wird synchron mit dem Aussenden der Nutzlichtimpulse für jeden Sensor die Lichtintensität des jeweils empfangenen reflektierten Nutzlichtimpulses erfasst. Jeweils zwischen zwei aufeinanderfolgenden Aktivierungsintervallen wird während eines Korrekturintervalls für jeden Sensor die Lichtintensität des empfangenen Hintergrundlichtes gespeichert, wobei für jeden Sensor die während des Korrekturintervalls gespeicherte Lichtintensität von der während des Aktivierungsintervalls erfassten Lichtintensität subtrahiert wird und jeweils die ermittelte Differenz der Lichtintensitäten zur weiteren Signalverarbeitung einer Auswerteeinheit für die Objekterkennung zugeführt wird.

Die Elimination der durch Gleichlichteinstrahlung bedingten Störsignalanteile der Empfangssignale erfolgt erfindungsgemäß in der Regeleinheit, welcher die Empfangssignale der jeweils aktivierten Empfänger zugeführt werden.

Wesentlich hierbei ist, dass die Regeleinheit nur während der Sendepausen der Sender aktiviert ist, nicht jedoch dann, wenn ein Sendepuls eines Senders emittiert wird und dadurch auf den zugeordneten aktivierten Empfänger ein Nutzsignal, das heißt ein auszwertender Empfangslichtpuls auf dem Empfänger generiert wird.

Dadurch wird vermieden, dass durch die Trägheit der Regeleinheit während der Emission des Sendepulses Regelvorgänge stattfinden, die zu einer Verfälschung des Empfangssignals führen würden. Dadurch werden Fehldetektionen sicher ausgeschlossen.

Ein wesentlicher Vorteil der Erfindung besteht darin, dass die empfangsseitige Schaltungsanordnung einen geringen konstruktiven Aufwand erfordert, wobei insbesondere nur wenige Bauteile benötigt werden. Insbesondere ist vorteilhaft, dass keine Vorverstärker zum Verstärken der Empfangssignale benötigt werden.

Die Erfindung wird im Folgenden anhand der Zeichnungen erläutert. Es zeigen:
- Figur 1a:: Schematische Darstellung eines Lichtgitters.
- Figur 1b:: Blockschaltbild eines ersten Ausführungsbeispiels einer Steuer-und Auswerteeinheit für das Lichtgitter gemäß Figur 1.
- Figur 2 a-e:: Zeitdiagramme von Signalen und Schaltzuständen für die An-ordnung gemäß Figur 2.
- Figur 3:: Variante der Anordnung gemäß Figur 2.
- Figur 4:: Weitere Ausfuhrungsform einer Regeleinheit für die Ausfüh-rungsform gemäß Figur 2.
- Figur 5:: Weitere Ausführungsform einer Regeleinheit für die Ausfüh-rungsform gemäß Figur 2.

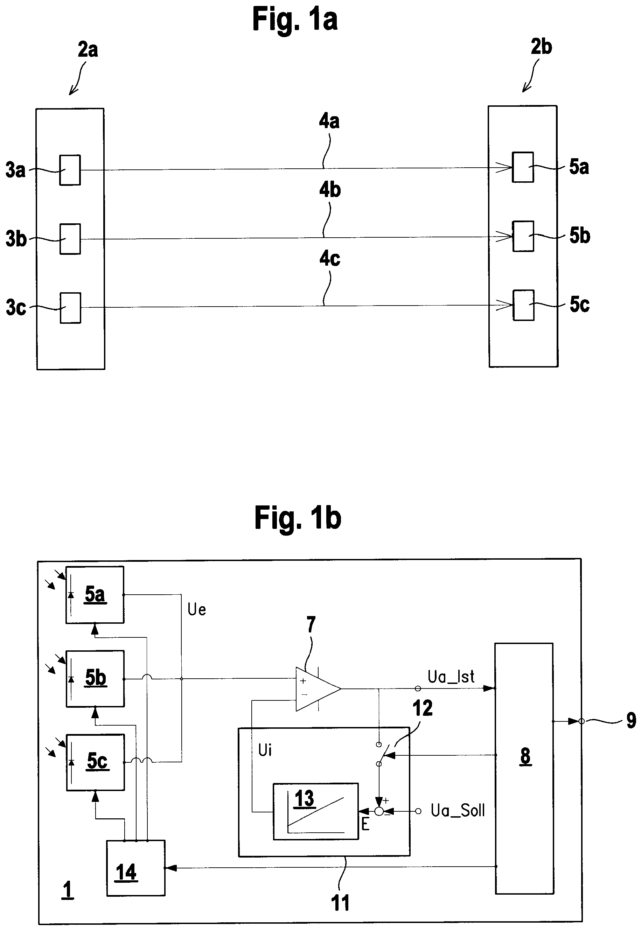

Figur 1 a zeigt schematisch den Aufbau des erfindungsgemäßen Lichtgitters 1. Das Lichtgitter 1 weist eine Sendereinheit 2a an einem ersten Rand eines Überwachungsbereichs und eine Empfängereinheit 2b an einem zweiten Rand des Überwachungsbereichs auf. In der Sendereinheit 2a sind mehrere, im vorliegenden Fall drei Sender 3a, 3b, 3c integriert, welche Lichtstrahlen 4a, 4b, 4c in Form von Sendepulsen emittieren. In der Empfängereinheit 2b sind Empfänger 5a, 5b, 5c integriert, deren Anzahl der Anzahl der Sender 3a, 3b, 3c entspricht. Jeweils ein Sender 3a, 3b, 3c und ein Empfänger 5a, 5b, 5c die gegenüberliegend angeordnet sind, bilden eine Lichtachse derart, dass bei freiem Überwachungsbereich (wie in Figur 1a dargestellt) die Lichtstrahlen 4a, 4b, 4c des Senders 3a, 3b, 3c auf den Empfänger 5a, 5b, 5c der Lichtachse geführt sind.

In der Sendereinheit 2a ist eine nicht dargestellte Steuereinheit 8 integriert, mit der die Sender 3a, 3b, 3c zyklisch einzeln nacheinander aktiviert werden. In der Empfängereinheit 2b ist eine nicht dargestellte Steuer- /und Auswerteeinheit 8 integriert, mittels derer die Empfänger 5a, 5b, 5c zyklisch einzeln nacheinander aktiviert werden, und in welcher aus den Empfangssignalen ein binäres Schaltsignal generiert wird.

Der Betrieb der Sender 3a, 3b, 3c und Empfänger 5a, 5b, 5c wird optisch über die Lichtstrahlen 4a, 4b, 4c in bekannter Weise synchronisiert, so dass immer der Sender 3a, 3b, 3c und der Empfänger 5a, 5b, 5c einer Lichtachse simultan aktiviert sind.

In der Steuer- und Auswerteeinheit 8 erfolgt zur Generierung des Schaltsignals eine Schwellwertbewertung der Empfangssignale. Das Schaltsignal nimmt den Zustand "freier Überwachungsbereich" ein, wenn keine der Lichtachsen nach einem Objekteingriff unterbrochen ist. Das Schaltsignal nimmt den Schaltzustand "Objekt erkannt" ein, wenn wenigstens eine Lichtachse durch einen Objekteingriff unterbrochen ist.

Figur 1 b zeigt ein Ausführungsbeispiel einer Steuer und Auswerteeinheit 8 für das Lichtgitter 1 gemäß Figur 1a.

Eine Schaltlogik 14 dient zur Einzelaktivierung der Empfänger 5a, 5b, 5c. Die Empfangssignale des jeweils aktivierten Empfängers 5a, 5b, 5c werden einer Regeleinheit 11 zugeführt, die dazu dient, Störungssignalanteile in den Empfangssignalen, bedingt durch Gleichlichteinstrahlung in die Empfänger 5a, 5b, 5c, zu eliminieren.

Das Empfangssignal des jeweils aktivierten Empfängers 5a wird als Eingangssignal Uₑ einem Verstärker 7 zugeführt. Dort wird die Differenz aus dem Eingangssignal Uₑ und einer Stellgröße Uᵢ, welche den Störlichtanteil des Empfangssignals repräsentiert, verstärkt. Das verstärkte Ausgangssignal Ua_ist wird einer Auswerteeinheit 8 zugeführt. Dort wird, in Abhängigkeit der Ausgangssignale Ua_ist aller Empfängern 5a, 5b, 5c, das Schaltsignal generiert und über einen Schaltausgang 9 ausgebeben. Die Regeleinheit 11 umfasst weiterhin einen Integrator 13 und einen von der Auswerteeinheit 8 gesteuerten Schalter 12, mit dem die Regeleinheit 11 aktiviert und deaktiviert werden kann.

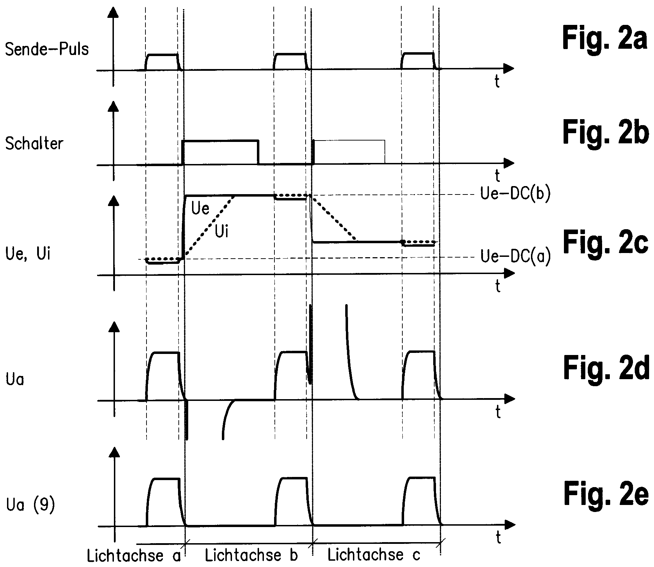

Die Komponenten der Regeleinheit 11 gemäß Figur 1b und deren Funktionsweisen werden anhand der Zeitdiagramme der Figuren 2a-2e erläutert.

In Figur 2a sind die Sendepulszeitfenster gezeigt. In diesen Zeitfenstern ist jeweils der Sender 3a, 3b, 3c einer Lichtachse aktiv.

Figur 2b zeigt die Stellung des Schalters 12. Bei geschlossenem Schalter 12 ist die Regeleinheit 11 aktiv und sorgt dafür, dass das Ausgangssignal Ua_ist auf einen Sollwert Ua_soll geregt wird (im gezeigten Fall ist dies der Nullpegel), der den Arbeitspunkt für die nachfolgende Signalauswertung bildet. Sobald der Schalter 12 geschlossen ist, beginnt ein Sample-Vorgang und der Integrator 13 verändert, wie in Figur 2c gezeigt, sein Ausgangssignal Ui, das auf das Gleichlicht Ue-DC(a) der Lichtachse a angepasst war. Das Regler-Ausgangssignal Ui (vorzugsweise besitzt der Regler einen Integrator-Anteil) nähert sich dem Eingangssignal Ue-DC(b), das nun durch die Gleichlichtverhältnisse der Lichtachse b bedingt ist. Dieser Vorgang kann sehr schnell erfolgen, da die Reglerzeitkonstante keinen Einfluss auf die nachfolgende Nutzlichtverstärkung hat. Nach dem Öffnen des Schalters 12 wird der Signalpegel Ui gehalten (Hold-Phase) und der Nutzlichtimpuls bewirkt über den Verstärker 7 das Ausgangssignal Ua_ist.

Wie in Figur 2d gezeigt, bewegt sich das Ausgangssignal Ua_ist während der Sendepulspause auf den vorgegebenen Sollpegel (z.B. Nullpotential). Es kann ohne weitere Hochpassfilterung in der Steuer- und Auswerteeinheit 8 verwendet werden und gegebenenfalls kann das Ausgangssignal in der Steuereinheit 8 während der Sendepulspause ausgetastet werden, so dass ein reines Nutzsignal an Anschluss 9 zur Verfügung gestellt werden kann.

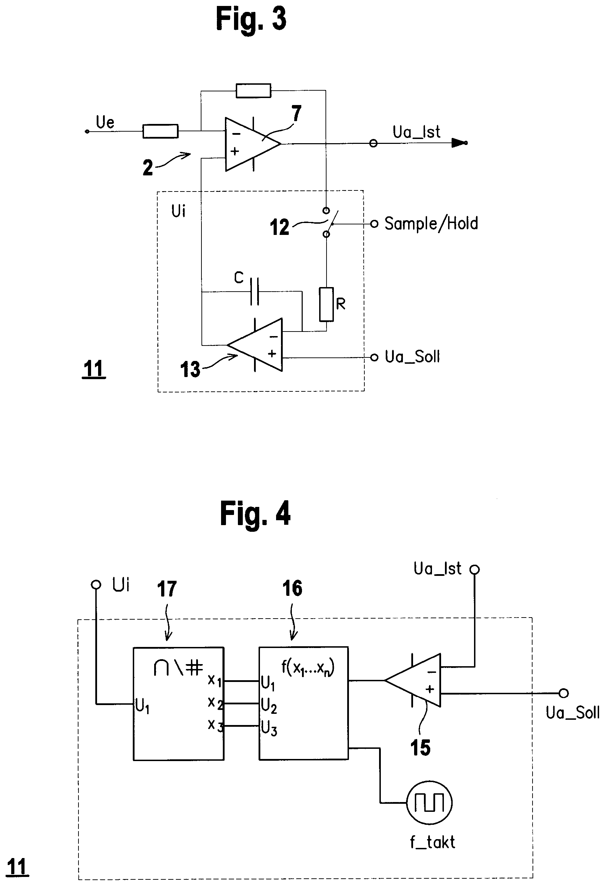

Figur 3 zeigt eine erste Ausführungsform eines Subtrahierglieds, welches in dem Verstärker 7 für die Anordnung gemäß Figur 1b integriert ist bzw. von diesem gebildet ist. die Regelung erfolgt durch einen analogen Integrator 13, dessen Zeitkonstante mit dem Widerstand R und dem Kondensator C einstellbar ist. Da die Spannung Usoll den Bezug für den Integrator 13 bildet, stellt sich diese Spannung auch bei Ua ein.

Figur 4 zeigt eine zweite Ausführungsform der Regeleinheit 11, wobei das Ausgangssignal Ua über einen Komparator 15 mit einem Arbeitspunkt-Sollwert verglichen wird und ein Schaltwerk 16 (z. B. in Form eines Up/Down-Counters) einen DA-Wandler 17 so nachstellt, dass sich das Ausgangssignal Ua schrittweise aber zügig an den Arbeitspunkt -Sollwertwert annähert.

Das Schaltwerk 16 übernimmt die Funktion des Schalters 12 von Figur 1b. Das Schaltwerk 16 weist hierzu einen Steuereingang auf, wobei je nach Steuersignal am Steuereingang das Schaltwerk 16 in zwei unterschiedliche Zustände versetzt wird. In einem compensate-Zustand werden vom Schaltwerk 16 Eingangs-Informationen entsprechend an seinen Ausgang weitergereicht und ausgegeben. In einem Freeze-Zustand ist diese Informationsweitergabe unterbunden.

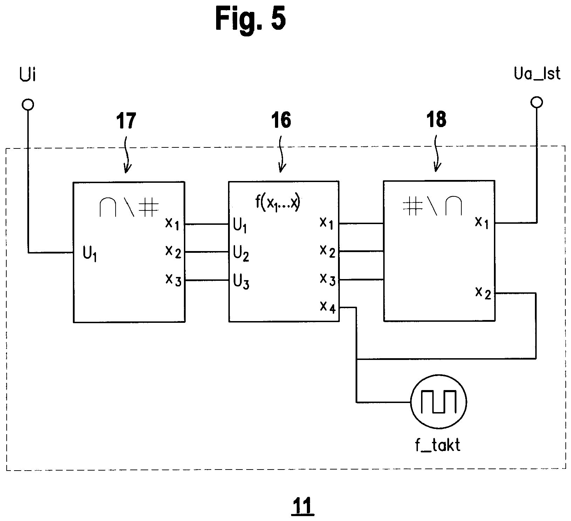

Figur 5 zeigt eine dritte Ausführungsform der Regeleinheit 11, wobei das Ausgangssignal Ua über einen AD-Wandler 18 abgefragt wird. Die digitale Ausführung der Regeleinheit 11 hat den Vorteil, dass keinerlei Drift und Offsetfehler auftreten und dass der Schalter 12 zum Einfrieren des Arbeitspunktes eingespart werden kann. Auch hier übernimmt das Schaltwerk 16, analog zur Ausführungsform gemäß Figur 4, die Funktion des Schalters 12. Bei der Ausführungsform gemäß Figur 5 ist die Funktion des Kompensators 15 aus Figur 4 im AD-Wandler integriert.

### Bezugszeichenliste

- (1): Lichtgitter
- (2a): Sendereinheit
- (2b): Empfängereinheit
- (3a): Sender
- (3b): Sender
- (3c): Sender
- (4a): Lichtstahlen
- (4b): Lichtstrahlen
- (4c): Lichtstrahlen
- (5a): Empfänger
- (5b): Empfänger
- (5c): Empfänger
- (6): Subtrahierglied
- (7): Verstärker
- (8): Auswerteeinheit / Steuereinheit
- (9): Schaltausgang
- (11): Regeleinheit
- (12): Schalter
- (13): Integrator
- (14): Schaltlogik
- (15): Komparator
- (16): Schaltwerk
- (17): DA-Wandler
- (18): AD-Wandler

## Patentansprüche

1. Lichtgitter zur Erfassung von Objekten in einem Überwachungsbereich, mit einer vorgegebenen Anzahl von Lichtstrahlen (4a, 4b, 4c) in Form von Sendepulsen emittierenden Sendern (3a, 3b, 3c) und einer der Zahl der Sender (3a, 3b, 3c) entsprechenden Anzahl von Lichtstrahlen (4a, 4b, 4c) empfangenden Empfängern (5a, 5b, 5c), wobei jeweils ein Sender (3a) einem Empfänger (5a) zur Ausbildung einer Lichtachse zugeordnet ist, so dass bei freiem Überwachungsbereich die Lichtstrahlen (4a, 4b, 4c) des Senders (3a) auf den zugeordneten Empfänger (5a) treffen, wobei die Sender (3a, 3b, 3c) und Empfänger (5a, 5b, 5c) der Lichtachsen zyklisch einzeln nacheinander aktiviert sind, und mit einer Auswerteeinheit (8) zur Generierung eines Schaltsignals in Abhängigkeit der Empfangssignale der Empfänger (5a, 5b, 5c), **dadurch gekennzeichnet, dass** eine Regeleinheit (11) vorgesehen ist, mittels der Störlichtanteile in den Empfangssignalen der Empfänger (5a, 5b, 5c) eliminiert sind, wobei die Regeleinheit (11) während der Zeitintervalle, innerhalb derer die Sender (3a, 3b, 3c) Sendepulse emittieren, deaktiviert ist.

2. Lichtgitter nach Anspruch 1, **dadurch gekennzeichnet, dass** eine Schaltlogik (14) vorgesehen ist, mittels derer die Empfänger (5a, 5b, 5c) einzeln nacheinander aktiviert werden, und dass Empfangssignale des jeweils aktivierten Empfängers (5a, 5b, 5c) der Regeleinheit (11) zugeführt werden.

3. Lichtgitter nach Anspruch 2, **dadurch gekennzeichnet, dass** die Sender (3a, 3b, 3c) über ein Schaltwerk (16) einzeln nacheinander aktiviert werden, wobei dieses mit der Schaltlogik (14) über die Lichtachsen optisch synchronisiert ist.

4. Lichtgitter nach einem der Ansprüche 1 bis 3, **dadurch gekennzeichnet, dass** die Regeleinheit (11) über einen Schalter (12) aktiviert und deaktiviert wird.

5. Lichtgitter nach Anspruch 4, **dadurch gekennzeichnet, dass** der Schalter (12) von der Auswerteeinheit (8) gesteuert wird.

6. Lichtgitter nach Anspruch 2 bis 5, **dadurch gekennzeichnet, dass** zwischen der Schaltlogik (14) und den Empfängern (5a, 5b, 5c) keine Vorverstärker vorgesehen sind.

## Claims

1. A light grid for detecting objects in a monitored area, having a predetermined number of light beams (4a, 4b, 4c) in the form of transmitting pulses emitting transmitters (3a, 3b, 3c) and a number of receiving receivers (5a, 5b, 5c) corresponding to the number of transmitters (3a, 3b, 3c), 4b, 4c) receiving receivers (5a, 5b, 5c), wherein in each case a transmitter (3a) is assigned to a receiver (5a) to form a light axis, so that when the monitoring area is free the light beams (4a, 4b, 4c) of the transmitter (3a) strike the assigned receiver (5a), the transmitters (3a, 3b, 3c) and receivers (5a, 5b, 5c) of the light axes being cyclically activated individually one after the other, and having an evaluation unit (8) for generating a switching signal as a function of the reception signals of the receivers (5a, 5b, 5c), **characterised in that** a control unit (11) is provided, by means of which interfering light components in the received signals of the receivers (5a, 5b, 5c) are eliminated, the control unit (11) being deactivated during the time intervals within which the transmitters (3a, 3b, 3c) emit transmission pulses.

2. The light grid according to claim 1, **characterised in that** a switching logic (14) is provided by means of which the receivers (5a, 5b, 5c) are individually activated one after the other, and **in that** reception signals of the respectively activated receiver (5a, 5b, 5c) are fed to the control unit (11).

3. The light grid according to claim 2, **characterised in that** the transmitters (3a, 3b, 3c) are activated individually one after the other via a switching mechanism (16), whereas said mechanism is optically synchronised with the switching logic (14) via the light axes.

4. The light grid according to one of claims 1 to 3, **characterised in that** the control unit (11) is activated and deactivated via a switch (12).

5. The light grid according to claim 4, **characterised in that** the switch (12) is controlled by the evaluation unit (8).

6. The light grid according to claim 2 to 5, **characterised in that** no preamplifiers are provided between the switching logic (14) and the receivers (5a, 5b, 5c).

## Revendications

1. Barrière lumineuse pour la détection d'objets dans une zone surveillée, comportant un nombre prédéterminé de faisceaux lumineux (4a, 4b, 4c) sous forme d'impulsions d'émission émettant des émetteurs (3a, 3b, 3c) et un nombre de récepteurs de réception (5a, 5b, 5c) correspondant au nombre d'émetteurs (3a, 3b, 3c), 4b, 4c) de récepteurs de réception (5a, 5b, 5c), dans lequel dans chaque cas, un émetteur (3a) est affecté à un récepteur (5a) pour former un axe lumineux, de sorte que lorsque la zone de surveillance est libre, les faisceaux lumineux (4a, 4b, 4c) de l'émetteur (3a) frappent le récepteur affecté (5a), les émetteurs (3a, 3b, 3c) et les récepteurs (5a, 5b, 5c) des axes lumineux étant activés cycliquement et individuellement les uns après les autres, et avec une unité d'évaluation (8) pour générer un signal de commutation en fonction des signaux de réception des récepteurs (5a, 5b, 5c), **caractérisée en ce qu'**une unité de commande (11) est prévue, au moyen de laquelle des composantes lumineuses parasites sont éliminées dans les signaux de réception des récepteurs (5a, 5b, 5c), l'unité de commande (11) étant désactivée pendant les intervalles de temps pendant lesquels les émetteurs (3a, 3b, 3c) émettent des impulsions d'émission.

2. Barrière lumineuse selon la revendication 1, **caractérisée en ce qu'**il est prévu une logique de commutation (14) au moyen de laquelle les récepteurs (5a, 5b, 5c) sont activés individuellement les uns après les autres, et **en ce que** des signaux de réception du récepteur (5a, 5b, 5c) respectivement activé sont envoyés à l'unité de commande (11).

3. Barrière lumineuse selon la revendication 2, **caractérisée en ce que** les émetteurs (3a, 3b, 3c) sont activés individuellement les uns après les autres par un mécanisme de commutation (16), ledit mécanisme étant synchronisé optiquement avec la logique de commutation (14) par l'intermédiaire des axes lumineux.

4. Barrière lumineuse selon l'une des revendications 1 à 3, **caractérisée en ce que** l'unité de commande (11) est activée et désactivée par un interrupteur (12).

5. Barrière lumineuse selon la revendication 4, **caractérisée en ce que** le commutateur (12) est commandé par l'unité d'évaluation (8).

6. Barrière lumineuse selon les revendications 2 à 5, **caractérisée en ce qu'**aucun préamplificateur n'est prévu entre la logique de commutation (14) et les récepteurs (5a, 5b, 5c).
